# EUROPÄISCHE PATENTSCHRIFT

(11) **EP 3 808 996 B1**
(45) Veröffentlichungstag und Bekanntmachung des Hinweises auf die Patenterteilung: **07.06.2023**
(21) Anmeldenummer: 19204030.1
(22) Anmeldetag: 18.10.2019
(51) Int. Cl.: F16B 2/22, F16B 5/06, F16L 3/233

(54) **VERANKERUNGSPUNKT**
ANCHOR POINT
POINT DE FIXATION

(43) Veröffentlichungstag der Anmeldung: 21.04.2021
(73) Patentinhaber: SFS Group International AG, 9435 Heerbrugg (CH)
(72) Erfinder: Heineke, Kai, 75385 Bad Teinach / Zavelstein (DE); Gentner, Philipp, 74189 Weinsberg (DE)

(56) Entgegenhaltungen:
- WO-A1-2005/075871
- GB-A- 2 163 509
- GB-A- 2 564 883
- US-A- 5 505 411
- US-B1- 6 273 656

## Beschreibung

Die vorliegende Erfindung befasst sich mit einem Verankerungspunkt, genauer einem Bauteil bzw. einer Anordnung von Bauteilen zur Krafteinleitung in ein flächiges Leichtbau-Wandelement. Ferner ist ein entsprechendes Verfahren zur Montage beschrieben.

### HINTERGRUND

In der Luftfahrtindustrie werden als Wandverkleidungen für Passagierkabinen möglichst leichte Baumaterialien verwendet. Ein seit langem verwendetes Grundmaterial sind Sandwichplatten. Ein Kern (Halmkern, Wabenkern, Schaumkern...) ist fest und flächig mit einer oberen und unteren dünnen Deckschicht verbunden. Als Deckschichten werden häufig Materialien wie Metall (Aluminiumblech), Kunststoff (GFK, CFK, Thermoplaste,...) oder plastifiziertes Papier verwendet. Als Kern findet man oft Waben oder Röhren aus Papier, Aluminium oder Kunststoffen sowie Kunststoffschäume. Das Kernmaterial ist in der Regel nicht oder nur gering punktbelastbar, weshalb es Verankerungselementen wie Schrauben, Nägeln oder Dübeln nur geringen Halt bieten kann.

### STAND DER TECHNIK

Sandwichplatten erfüllen eine tragende wie dekorative Funktion, wirken geräuschdämmend und isolierend. Nachteilig ist aber, dass deren Leichtbauweise das Befestigen am Flugzeugrumpf sowie die Verankerung von weiteren Anbauteilen sehr aufwändig macht. Traditionell werden daher Befestiger an solchen Sandwichplatten flächig verklebt oder mit Unterlagscheiben über beide Deckschichten verschraubt, weil so eine Krafteinleitung in die Sandwichplatte gewährleistet werden kann. Alternativ werden Sacklöcher durch eine Deckschicht bis in den Kern eingebracht und ein Verankerungspunkt dadurch geschaffen, dass ein Halteelement mit einer Klebstoffmenge satt im Volumen einer Wabenstruktur verankert wird (Hinterschnittverankerung). Dass dies punktuell eine deutliche Gewichtserhöhung bedeuten kann, liegt auf der Hand. Auch ist eine einmal so gesetzte Verankerung kaum mehr entfernbar. Weiterer Stand der Technik:
Das Dokument GB 2 163 509 zeigt eine Schraubmuffe mit polygonalem Querschnitt für eine Hinterschnittverankerung, bei der durch eine Halterungsschraube flügelartige, flächige Haltezungen durch Wegspreizen in den Hinterschnitt verdrängt werden.
Das Patent US 6,273,656 beschreibt eine Haltevorrichtung aus zwei Teilen. Der erste Teil weist eine scheibenförmige Platte mit einem an der Unterseite zentral angeordneten, dübelähnlichen Verankerungsteil mit einer axialen Öffnung auf. Der zweite Teil der Haltevorrichtung besteht aus einem Pin, der von der Scheibenseite her in den Verankerungsteil eingeschoben wird. Der Pin weitet die axiale Öffnung auf und bewirkt so die Verankerung z. B. in einer Platte.
Die Publikationsschrift WO2005/075871 A1 zeigt eine Halterung zur Befestigung von Kabeln oder Leitungen auf einer Oberfläche. Dazu wird ein stiftförmiges Verriegelungselement in eine Bohrung eingebracht, wo sich Rast- bzw. Abstützelemente in der Bohrwand verankern. Die Halterung kann am oberen Ende des Verriegelungselementes einen einstückig angebrachten Kabelbinder aufweisen.
Das US Patent US 5,505,411 beschreibt eine Halterung für Kabel, die ebenfalls aus einem in einer Bohrung durch Rastzungen zu halternden Verriegelungselement besteht, das an der Oberseite eine Öse zur Verfügung stellt, an den weitere Klemmhalterungen angebracht werden können.
Die GB 2 564 883 zeigt eine Wandhalterung zur Kombination mit einem Kabelbinder. Die Wandhalterung ist dübelähnlich ausgeführt und zum Einführen in eine Wandbohrung vorgesehen. Sie klemmt in der Öffnung mittels Rastzungen plus optionalen Spreizkeilen. Ein Kabelbinder kann durch einen Kanal im Kopf der Wandhalterung geführt werden.

Mit Verankerungspunkt sei im Kontext dieser Anmeldung ein Bauteil gemeint, welches die Krafteinleitung in eine Sandwichplatte erlaubt bzw. wie später gezeigt wird, in eine dünne Platte und dabei sicher und einfach angebracht werden kann ohne den oben beschriebenen Aufwand von Produkten des Standes der Technik.

### BESCHREIBUNG DER ERFINDUNG

Die Merkmale des unabhängigen Anspruchs 1 beschrieben einen solchen Verankerungspunkt. Die Unteransprüche beziehen sich auf weitere Varianten und Ausführungsbeispiele. Im Grundsatz umfasst ein Verankerungspunkt für ein Befestigungselement eine im wesentlichen flache Ankerplatte 12 und ein damit verbundenes Federelement 14 (14'), das wiederum mindestens zwei Rastzungen 16 und 17 aufweist. Die Ankerplatte 12 ist darauf ausgelegt, in ein Sackloch oder eine Durchbohrung eingebracht zu werden und zwar bevorzugt so, dass ein Rand der Ankerplatte auf der Oberfläche 23 jener Deckschicht oder Platte aufliegen kann, wo die Krafteinleitung erfolgen soll. Der Durchmesser der Ankerplatte entspricht also im Wesentlichen der Bohrung plus einem Auflagerand. Der Begriff Ankerplatte impliziert bereits, dass diese als Verbindungsstelle für ein Befestigungselement 30 dienen soll.

Bevorzugt ist daher, dass die Ankerplatte eine im Wesentlichen kreisförmige Scheibenform aufweist mit einer Ober- und einer Unterseite, wobei die Unterseite eine flächige Randauflage 13 aufweist, welche als (kreisringförmige) Stufe ausgearbeitet sein kann, was eine zentrierende Wirkung bei der Montage bewirkt.

An der Ankerplatte befindet sich das Federelement 14, das bevorzugt als Kunststoffschlaufe in Form eines Omega ausgebildet ist und die Federwirkung hauptsächlich in einer Richtung senkrecht zur Ebene der Ankerplatte ausübt. Dabei sind die Beine des Omega an der Ankerplatte orientiert, die obere Rundung des Omegas weist also von der Ankerplatte 12 weg. Das Federelement kann natürlich auch anders als hier geschildert bzw. in den Figuren gezeichnet, ausgebildet werden. Funktionell äquivalente Varianten seien daher mitumfasst.

Der Einbaulogik folgend, bei der sich der Monteur vor der Wand befindet, ist das Federelement also auf der Unterseite der Ankerplatte angebracht und wird dadurch im Bohrloch versenkt. Das Federelement 14 ist an seiner Aussenseite im der Ankerplatte fernen Abschnitt flächig ausgebildet und/oder stellt eine Anlagefläche 15 zur Verfügung. Diese Anlagefläche dient im endmontierten Zustand dem Befestigungselement 30 als Kontaktfläche.

Bevorzugt wird die Ankerplatte mindestens 2 Durchgangsöffnungen 26, 27 aufweisen. Diese Öffnungen dienen dem Durchschlaufen des Befestigungselementes.

Als drittes, zentrales Element eines Verankerungspunktes sind Rastzungen 16, 17 vorgesehen. Sie erstrecken sich von einem gemeinsamen Verbindungsbereich 20 mit dem Federelement 14 im Wesentlichen diametral voneinander weg. Das Verbindungsstück ist in bevorzugter Ausführung im Kopfbereich (obere Rundung) lokalisiert. Die Rastzungen sind wie von der Bezeichnung impliziert, als federnde Elemente ausgebildet, wobei ein erstes Ende mit dem Verbindungsstück 20 zusammenhängt und das andere Ende 21 bzw. 22 als freies oder offenes Ende ausgeführt ist und dazu ausgelegt ist, sich mit umgebenden Strukturen zu verhaken und damit einen Halteeffekt zu bewirken. Die Rastzungen können im unverbauten Zustand als gerade oder leicht gekrümmte, im Querschnitt ovale oder rechteckige Bauteile ausgeführt sein. Ihre Länge sollte so gewählt werden, dass sie zum Einführen in die Bohrung federnd zusammengedrückt werden müssen. Dadurch lässt sich speziell bei Sandwichplatten erreichen, dass die Rastzungen nach Überwindung des Widerstands am Bohrungsrand der Deckschicht in den weicheren Kernbereich auffedern und somit der Abstand der Enden 21, 22 grösser ist als der Bohrungsdurchmesser. Die Rastzungen hinterschneiden also die Bohröffnung. Basierend auf dieser skizzierten Funktionalität ist klar, dass die Enden 21, 22 der Rastzungen 16, 17 so ausgeführt werden können, um die beschriebene Funktionalität zu erfüllen. Je nach Kern können die Enden schaufelförmig verbreitert hergestellt werden oder zugespitzt. Statt diskreter Rastzungen könnte auch eine schildförmige Kugelschale gewählt werden, deren Rand als Ganzes eine Auflage auf der Rückseite der Deckschicht bildet. So liesse sich auch eine Ausführungsform eine Verankerungspunktes an einer dünnen Platte allein realisieren.

Ferner weist jede Rastzunge eine Ober- und eine Unterseite auf, wobei die Oberseite zur Ankerplatte weist und eine Führungsfläche 19 zur Verfügung stellt. Die Funktion der Führungsfläche 19 und ihr Zusammenspiel mit der Anlagefläche 15 werden weiter unten genauer erläutert.

Der Verbindungsbereich 20 wird aus einem oder mehreren Stegen oder Wandabschnitten gebildet, die die Rastzungen 16, 17 und das Federelement 14 so verbinden, dass die Führungsfläche 19 und die Anlagefläche 15 zumindest abschnittsweise gegenüberliegend beabstandet angeordnet sind und zwischen sich einen Kanal 25 bilden. Dieser Kanal spielt bei der Führung bzw. Durchschlaufen des Befestigungselementes eine Rolle, er ist, der Krümmung des Oberteils des omegaförmigen Federelementes folgend, bevorzugt gerundet. Wie bereits angedeutet, soll ein Durchschlaufen des Befestigungselementes durch die Ankerplatte möglich sein, weshalb scharfe Kanten und enge Kurven weniger bevorzugt sind.

Es hat sich gezeigt, dass der Verankerungspunkt mit Federelement und Rastzungen einstückig aus Kunststoff hergestellt werden kann und bevorzugt durch Spritzgiessen hergestellt wird. Alternativ könnte ein Zusammenbau aus Einzelelementen im Materialmix erfolgen.

Um zur Funktionalität als Befestigungspunkt zu gelangen, soll im Folgenden eine Anordnung aus einem Verankerungspunkt und einem Befestigungselement betrachtet werden. Dabei sei unter Befestigungselement in erster Linie ein flexibles, halbstarr-elastisches Band gemeint. Halbstarr-elastisch meint bevorzugt, dass das Band eine gewisse Eigensteifigkeit besitzt, aber reversibel gekrümmt werden kann. Das ist nützlich, wenn das Befestigungselement durch die erste Durchgangsöffnung 26 an der Oberseite 23 der Ankerplatte 12 eingeführt wird, danach entlang der Führungsfläche 19 im Kanal 25 geführt und umgelenkt wird und durch die zweite Durchgangsöffnung 27 wieder an der Oberseite 23 austritt. Die gewählte Länge des Befestigungselementes erlaubt dabei eine Anpassung an den zu befestigenden Gegenstand.

Als besonders bevorzugt wird als Befestigungselement 30 ein Kabelbinder verwendet. Ebenso denkbar wäre ein Bindedraht oder alle anderen bandähnlichen Elemente, die sich mit dem beschriebenen Funktionsprinzip des Verbindungspunktes vereinbaren lassen. Ein Kabelbinder ist als bekanntes und zuverlässiges Befestigungselement mit einem einrastenden und verstellbaren Verschluss bestens geeignet, um mit einem Verbindungspunkt zusammenzuwirken. Das durch die Auslegung von Federelement und Rastzungen festgelegte Design erlaubt, je nach Bedarf längere oder kürzere Kabelbinder zu verwenden. Prinzipiell lässt sich ein Kabelbinder als Bestandteil einer Anordnung auch wieder aufschneiden, entfernen und durch einen Neuen mit geänderter Länge ersetzen. Auch wenn kein Ersatz vorgesehen würde, kann die Ankerplatte mit Federelement und Rastzungen als Abdeckung im Bohrloch verbleiben.

In einer denkbaren Variation könnte auch ein Kabelbinder einstückig mit dem Verankerungspunkt hergestellt werden; verbunden im Bereich der oberen Rundung. Da sich Kabelbinder nach Verschliessen ablängen lassen, würden sich mit so einer einstückig (e.g. aus Kunststoff) hergestellten Anordnung viele Anwendungsfälle abdecken lassen.

Im Folgenden soll nun ein Montageverfahren beschrieben werden, das die Anwendung eines erfindungsgemässen Verankerungspunktes bzw. einer Anordnung beschreibt.

Ein Verfahren zum Festlegen eines Verankerungspunktes umfasst im Grundsatz die folgenden Schritte:
a) Vorsehen einer Öffnung ausreichender Tiefe in einer Oberfläche und Bereitstellen eines Verankerungspunktes. Die Grösse der Bohrung korreliert dabei wie oben beschrieben.
b) Eindrücken des Verankerungspunktes durch die Öffnung, bis die Rastzungen hinter der Öffnung anliegen bzw. im Falle einer Deckschicht eines Sandwichpanels im Kern sich verspreizen
c) Einführen eines Befestigungselementes in Form eines elastisch-halbstarren Bandes mit einem Ende in eine erste Durchgangsöffnung 26 an der Oberseite der Ankerplatte,
d) bis das Ende des Befestigungselementes an der Oberseite der Ankerplatte an der zweiten Öffnung wieder austritt
e) Anlegen eines zu befestigenden Gegenstandes an der Ankerplatte im Bereich zwischen den beiden Enden des Befestigungselementes
f) Ausüben einer Zugkraft auf beide Enden des Befestigungselementes gegen den Widerstand des Federelementes
g) Verbinden der beiden Enden des Befestigungselementes (30) dergestalt, dass der zu befestigende Gegenstand durch die Federkraft des Federelementes (14) angedrückt wird.

In diesem Zusammenhang wird die Doppel-Funktion des Federelementes 14 deutlich. Durch das Schliessen des Befestigungselementes / Kabelbinders und/oder den Zug an den Enden wird das Federelement gestaucht bzw. komprimiert und sorgt so für einen sicheren Halt des zu befestigenden Gegenstandes, weil das Befestigungselement den Gegenstand an die Oberseite der Ankerplatte presst. Gleichzeitig wird durch die Stauchung der Feder der Verbindungsbereich 20 näher an die Unterseite der Ankerplatte bewegt, was zu einem Aufspreizen der Rastzungen 16, 17 führt und auch deren Verankerung verbessert.

Das so beschriebene Verfahren kann durch Zwischenschritte wie Ausrichten, Lageprüfung oder weitere Sicherungsmassnahmen unterstützt werden. So kann z.B. die Randauflage 13 um eine Klebeschicht ergänzt werden, die die Fixierung der Ankerplatte am Bohrlochrand verbessert.

Alternativ können gewisse Schritte dieser Abfolge auch getauscht werden, z.B. als Reihenfolge a), c), d), b). Ob der Kabelbinder zuerst in die Ankerplatte und danach die Anordnung in das Bohrloch eingeführt wird oder der Kabelbinder erst eingeschlauft wird, wenn die Ankerplatte gesetzt wurde, hängt vom Einsatzfall ab und kann vom Monteur je nach Anforderung erledigt werden.

Insbesondere wenn der Verankerungspunkt bzw. die Anordnung aus Verankerungspunkt und Befestigungselement als Kabelhalterung verwendet wird, kann es notwendig sein, Kreuzungen von Kabelbündeln zu realisieren. Dazu kann es nützlich sein, ein Distanzelement zu verwenden, das in die Anordnung eingefügt werden kann. Um dies zu realisieren, kann der Schritt e) als die Schritte e1) und e2) realisiert werden:
e1) Anbringen eines Turmelementes 40 an der Ankerplatte 12 dergestalt, dass dessen Zentrierkomponenten 41, 42 am ersten Längsende formschlüssig in komplementäre Strukturen der Ankerplatte eingreifen oder einrasten
e2) Anlegen eines zu befestigenden Gegenstandes im Aufnahmebereich 47 am zweiten Längsende des Turmelementes 40

Mit Zentrierkomponente ist dabei ein Oberflächenmerkmal des Turmelementes gemeint, das so ausgelegt wurde, dass es an der Oberfläche der Ankerplatte formschlüssig angreift oder in sie eingreift und eine Zentrierwirkung von Ankerplatte und Turmelement ausübt, mit anderen Worten eine Soll-Lage herzustellen erlaubt. Eine Zentrierkomponente kann also als eine Ein- oder Mehrzahl vorstehender Stift(e), von Rippen, einer Wellenstruktur ausgeführt werden.

Auch diese Variante kann in der Reihenfolge unterschiedlich gehandhabt werden:
a), c), d), e1), b), e2), f), g) bzw. a), e1), c), d), b), e2) f), g)

Als zusätzliche Sicherung kann nach Schritt g) durch eine weitere oder eine bestehende Öffnung in der Ankerplatte 12 ein Kleb- oder Füllstoff in die Öffnung hinter der Ankerplatte (12) injiziert werden. Die kann durch eine entsprechend ausgerüstete Klebepistole oder eine handelsübliche Injektionsnadel erfolgen. Vorteil ist hierbei, dass eine Hinterschnittverankerung entsteht, wobei - je nach injizierter Stoffmenge - die Rastzungen im Kern bzw. an der Rückseite der Deckschicht verkleben bzw. der Kabelbinder mit dem Federelement verbunden wird. Als Füllstoffe können auch expandierende Schäume verwendet werden, die den Zwischenraum zwischen Ankerplatte und Bohrlochwand füllen bzw. in die Zellen des Kerns eindringen.

Wird im Bereich des Federelements, beispielsweise dort, wo die Feder nur im komprimierten Zustand verbleibt, ein Klebstoffdepot (Kapsel) geschützt abgelegt, kann die Anordnung so ausgelegt werden, dass durch den finalen Schliessprozess mit der Stauchung des Federelements die Kapsel gesprengt wird und der Kleb-/Füllstoff ohne weiteres Zutun vor Ort verteilt wird.

### BESCHREIBUNG DER FIGUREN

Die Erfindung wird nun mit Bezug auf die begleitenden Zeichnungen anhand besonders bevorzugter Ausführungsformen beispielhaft erläutert.
Figuren 1 und 2 zeigen einen zentralen durch einen Verbindungspunkt in verschiedenen Montagezuständen.
Figur 3 zeigt einen Verbindungspunkt in schräger 3D-Ansicht
Figur 4 zeigt eine Draufsicht auf die Oberseite einer Ankerplatte
Figur 5 ist eine 3D Ansicht einer Anordnung aus Verankerungspunkt und Befestigungselement
Figur 6 zeigt ein Turmelement.

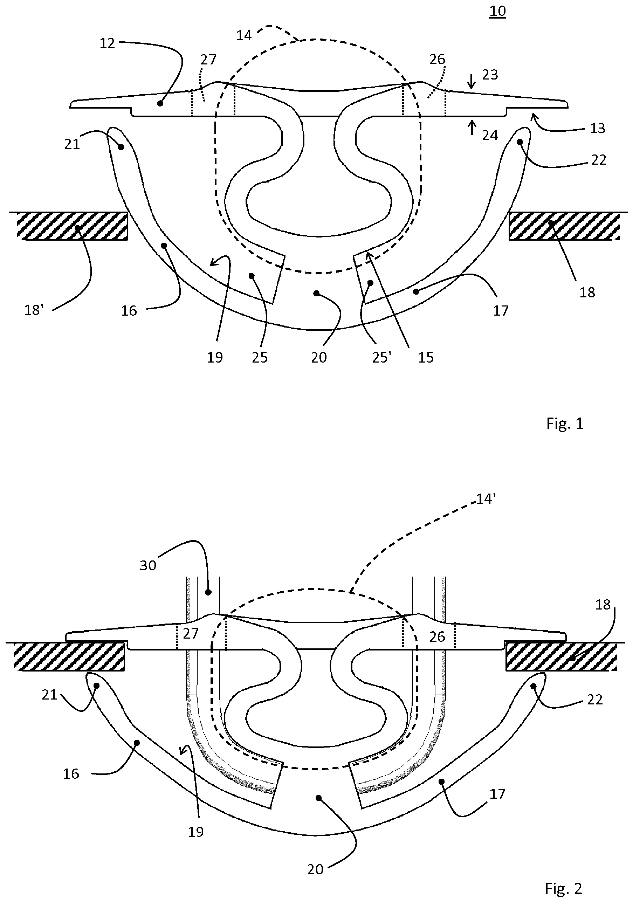

Die Figuren 1 und 2 zeigen im Querschnitt die Montagesituation eines Verankerungspunktes 10 in einer dünnen Platte bzw. Oberfläche 18 bzw. 18'. Die Ankerplatte 12 hat eine Breite bzw. einen Durchmesser der grösser ist die Bohrung / Aussparung / Öffnung in der Oberfläche 18. Am Rand ist eine abgestufte Randauflage 13 vorgesehen, deren Stufe so gewählt ist, dass sie die Ankerplatte in der Bohrung / Öffnung zentriert. Die Oberseite bzw. die Unterseite ist mit kurzen Pfeilen 23, 24 gekennzeichnet. Die Merkmale 26 und 27 bezeichnen Durchgangs- oder Durchtrittsöffnungen durch die Ankerplatte, im gezeigten Fall ausgelegt auf die Verwendung eines Kabelbinders als exemplarisches Befestigungselement 30.

Die beiden Rastzungen 16 und 17 sind über den Verbindungsbereich 20 mit dem Federelement verbunden. Sie erstrecken sich - in den Figuren - nach rechts und links. In Figur 1 zeigt sich, dass die Rastzungen beim Einführen in die Öffnung in der Oberfläche 18 am Rand anschlagen und bei weiterem Druck auf die Ankerplatte 12 nach innen einfedern. Nach Passieren der Deckschicht können die Rastzungen 16, 17 wieder in die Ursprungslage zurückkehren. Je nach gewählter Elastizität der Rastzungen 16, 17 und ihrer Bauform können die Rastzungen auch die Funktion einer Verliersicherung leisten.

In der gezeigten, bevorzugten Ausführungsform von Figur 1 und 2 das Federelement 14 hat die beschriebene Omega-Form, angedeutet durch den gestrichelten Kreis. Der Vergleich zwischen Figur 1 und 2 zeigt, dass in Figur 2 das Federelement gestaucht ist, was zu einem Andrückvorgang für die Rastzungen an die Deckschicht führt. Die Enden 21, 22 der Rastzungen ist hier vereinfacht dargestellt. Der Bereich zwischen den Rastzungen und der Oberseite des omegaförmigen Federelements 14, 14' bildet den Kanal 25 bzw. 25', die in Figur 2 bereits mit einem Kabelbinder gefüllt sind, der die Anlagefläche 15 kontaktiert und die Feder komprimiert.

In Figur 1 kann man nachvollziehen, dass ein Kabelbinder, der durch z.B. die Öffnung 27 von der Oberseite 23 der Ankerplatte 12 eingeführt wird, auf die Führungsfläche 19 trifft und an ihr entlang abgelenkt wird. Im Kanal 25 wird das Befestigungselement 30 geführt und kann danach durch die Öffnung 26 wieder austreten. Diese Situation zeigt Figur 2, wo durch Anziehen des Kabelbinders der Kontakt mit der Führungsfläche 19 nicht mehr vorhanden ist. Die Zugkraft auf den Kabelbinder überträgt sich via Auflagefläche 15 auf das Federelement 14 (14').

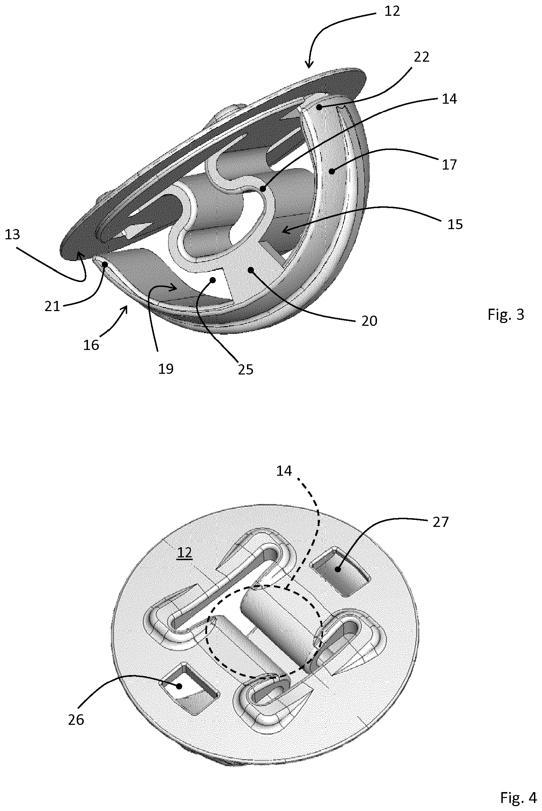

Figur 3 zeigt einen Verbindungspunkt ohne Kabelbinder in schräger 3D-Ansicht. Mann kann erkennen, wie das Verbindungselement 20 durch seine Anordnung seitlich den Kanal 25 freilässt, um ein Umlenken des Befestigungselementes zu erlauben.

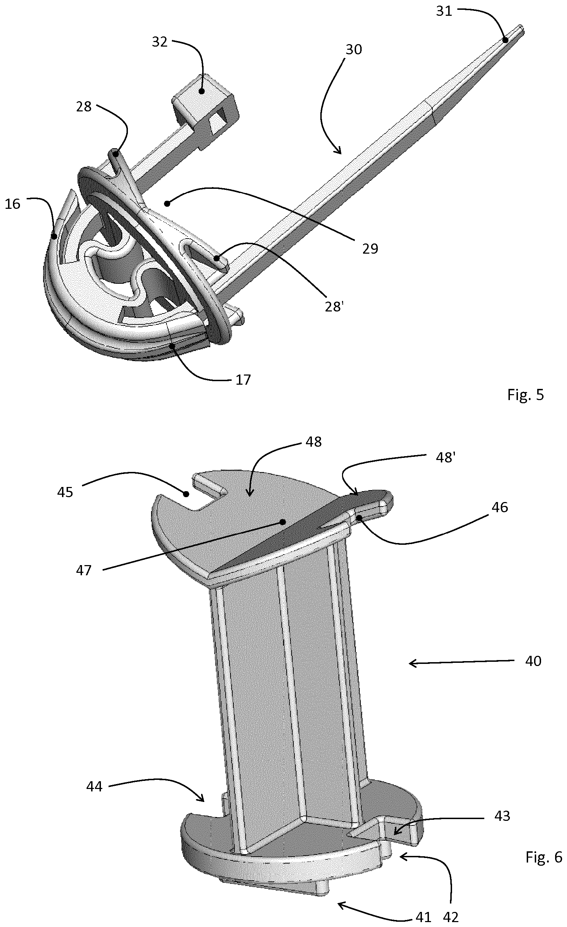

Figur 4 ist eine Draufsicht auf eine Variante einer Ankerplatte 12. Die Durchtrittsöffnungen 26, 27 sind von der Oberseite 23 her gezeigt. Das Federelement geht wie gezeigt in eine ringförmige Ausführung der Ankerplatte über. Die gezeigten Konturierungen dienen einerseits dem Zentrieren eines festzuhaltenden Gegenstandes oder, alternativ der Zentrierung eines Turmelementes (Figur 6).

Figur 5 zeigt eine Variante einer Verankerungspunktes 10 mit zwei gegeneinander schräg gestellten Trogflächen 28, 28' , die zwischen sich einen Aufnahmebereich 29 formen. Gezeigt ist ebenfalls ein Kabelbinder 30 mit seinen bekannten Enden 31, 32, hier als offenes Ende mit zulaufender Spitze und als Rastelement zum Verschliessen.

Figur 6 wiederum zeigt ein mögliches Turmelement oder Distanzstück 40. Sein erstes (hier unteres) Ende weist Zentrierelemente 41, 42 auf, die in die Schlitze seitlich zum Federelement 14 von Figur 4 einrasten können. Das zentrale Schaftelement ist hier mit kreuzförmigen Querschnitt gezeigt, es kann jedoch auch als Rohrstruktur ausgeführt werden. Am oberen Ende befindet sich, ähnlich den Trogflächen 28, 28' auf Figur 5 ein Aufnahmebereich 47 mit zwei verkippten Anlageflächen 48, 48'. Die Aussparungen 43-46 dienen der Führung und Zentrierung des Kabelbinders.

Die in der vorstehenden Beschreibung, in den Zeichnungen sowie in den Ansprüchen offenbarten Merkmale der Erfindung können sowohl einzeln als auch in beliebiger, jedoch technisch sinnvoller bzw. vorteilhafter Kombination für die Verwirklichung der Erfindung wesentlich sein.

## Patentansprüche

1. Verankerungspunkt (10) für ein Befestigungselement (30), umfassend eine im Wesentlichen flache Ankerplatte (12) und ein damit verbundenes Federelement (14), das wiederum mindestens zwei Rastzungen (16, 17) aufweist; wobei die Rastzungen (16, 17) sich von einem gemeinsamen Verbindungsbereich (20) mit dem Federelement (14) aus, im Wesentlichen diametral voneinander weg erstrecken und je in einem offenen Ende (21, 22) auslaufen und jede Rastzunge eine Ober- und eine Unterseite aufweist, wobei die Oberseite zur Ankerplatte (12) weist und eine Führungsfläche (19) zur Verfügung stellt;
wobei das Federelement (14) an seiner Aussenseite im von der Ankerplatte (12) wegweisenden Abschnitt flächig ausgebildet ist und/oder eine Anlagefläche (15) zur Verfügung stellt; **dadurch gekennzeichnet, dass** der Verbindungsbereich (20) aus einem oder mehreren Stegen oder Wandabschnitten gebildet ist, die die Rastzungen (16, 17) und das Federelement (14) dergestalt verbinden, dass die Führungsfläche (19) und die Anlagefläche (15) zumindest abschnittsweise gegenüberliegend beabstandet angeordnet sind und zwischen sich einen Kanal (25, 25') bilden.

2. Verankerungspunkt (10) nach Anspruch 1, **dadurch gekennzeichnet, dass** die Ankerplatte eine im Wesentlichen kreisförmige Scheibenform aufweist mit einer Oberseite (23) und einer Unterseite (24), wobei die Unterseite (24) eine flächige Randauflage (13) aufweist.

3. Verankerungspunkt (10) nach Anspruch 2, **dadurch gekennzeichnet, dass** die Randauflage (13) als Stufe ausgebildet ist.

4. Verankerungspunkt (10) nach Anspruch 1-3, **dadurch gekennzeichnet, dass** das Federelement (14) als Kunststoffschlaufe in Form eines Omega ausgebildet ist und die Federwirkung hauptsächlich in einer Richtung senkrecht zur Ebene der Ankerplatte ausübt.

5. Verankerungspunkt (10) nach Anspruch 1-4, **dadurch gekennzeichnet, dass** die Ankerplatte (12) mindestens 2 Durchgangsöffnungen (26, 27) aufweist.

6. Verankerungspunkt (10) nach Anspruch 1-5, **dadurch gekennzeichnet, dass** der Verankerungspunkt mit Federelement (14) und Rastzungen (16,17) einstückig aus Kunststoff besteht und bevorzugt durch Spritzgiessen hergestellt wird.

7. Anordnung aus einem Verankerungspunkt nach Anspruch 6 und einem Befestigungselement (30), **dadurch gekennzeichnet, dass** das Befestigungselement (30) als flexibles, halbstarr-elastisches Band ausgebildet ist, welches, durch eine erste Durchgangsöffnung (26) an der Oberseite (23) der Ankerplatte (12) eingeführt, entlang der Führungsfläche (19) im Kanal (25) umgelenkt und durch die zweite Durchgangsöffnung (27) wieder an der Oberseite (23) austritt.

8. Anordnung nach Anspruch 7, **dadurch gekennzeichnet, dass** das Befestigungselement (30) als Kabelbinder ausgeführt ist.

9. Verfahren zum Festlegen eines Verankerungspunktes (10) nach Anspruch 1-8, mit folgenden Schritten:
a) Vorsehen einer Öffnung ausreichender Tiefe in einer Oberfläche (18) und Bereitstellen eines Verankerungspunktes (10)
b) Eindrücken des Verankerungspunktes (10) durch die Öffnung, bis die Rastzungen (16, 17) hinter der Öffnung anliegen bzw. im Falle einer Deckschicht eines Sandwichpanels im Kern sich verspreizen
c) Einführen eines Befestigungselementes (30) in Form eines elastisch-halbstarren Bandes mit einem Ende (31) in eine erste Durchgangsöffnung (26) an der Oberseite (23) der Ankerplatte (12),
d) bis das Ende (31) an der Oberseite der Ankerplatte (12) an der zweiten Öffnung wieder austritt
e) Anlegen eines zu befestigenden Gegenstandes an der Ankerplatte (12) im Bereich zwischen den beiden Enden des Befestigungselementes (30)
f) Ausüben einer Zugkraft auf beide Enden (31, 32) des Befestigungselementes (30) gegen den Widerstand des Federelementes (14)
g) Verbinden der beiden Enden des Befestigungselementes (30) dergestalt, dass der zu befestigende Gegenstand durch die Federkraft des Federelementes (14) angedrückt wird.

10. Verfahren nach Anspruch 9, **dadurch gekennzeichnet, dass** die Schritte a) bis d) in der Reihenfolge a), c), d), b) ausgeführt werden.

11. Verfahren nach Anspruch 9 oder 10, **dadurch gekennzeichnet, dass** der Schritt e) alternativ ausgeführt wird als:
e1) Anbringen eines Turmelementes (40) an der Ankerplatte (12) dergestalt, dass dessen Zentrierkomponenten (41, 42) am ersten Längsende formschlüssig in komplementäre Strukturen der Ankerplatte (12) eingreifen oder einrasten
e2) Anlegen eines zu befestigenden Gegenstandes im Aufnahmebereich (47) am zweiten Längsende des Turmelementes (40)

12. Verfahren nach Anspruch 9 und 11 bzw. 10 und 11, **dadurch gekennzeichnet, dass** die Reihenfolge der Schritte wie folgt ausgeführt wird:
a), c), d), e1), b), e2), f), g) bzw. a), e1), c), d), b), e2) f), g)

13. Verfahren nach Anspruch 9-12, **dadurch gekennzeichnet, dass** nach Schritt g) durch eine weitere oder eine bestehende Öffnung in der Ankerplatte (12) ein Kleb- oder Füllstoff in die Öffnung hinter der Ankerplatte (12) injiziert wird.

14. Verfahren nach Anspruch 9-12, **dadurch gekennzeichnet, dass** durch Schritt f) eine im Wirkbereich des Federelements (14) angebrachte Vorratskapsel mit Kleb- oder Füllstoff aktiviert wird und ihren Inhalt in der Öffnung freigibt.

## Claims

1. Anchor point (10) for a fastening element (30), comprising a substantially flat anchor plate (12) and a spring element (14) connected thereto, which in turn has at least two latching tongues (16, 17); wherein
the latching tongues (16, 17) extend from a common connecting region (20) with the spring element (14) substantially diametrically away from each other and each terminate in an open end (21, 22), and each latching tongue has an upper and a lower side, wherein the upper side faces the anchor plate (12) and provides a guide surface (19);
wherein the spring element (14) is of flat design on its outer side in the section facing away from the anchor plate (12) and/or provides an abutment surface (15); **characterized in that** the connecting region (20) is formed from one or more webs or wall sections which connect the latching tongues (16, 17) and the spring element (14) in such a way that the guide surface (19) and the abutment surface (15) are spaced apart at least in sections opposite one another and form a channel (25, 25') between them.

2. Anchor point (10) according to claim 1, **characterized in that** the anchor plate has a substantially circular disk shape with an upper side (23) and a lower side (24), wherein the lower side (24) has a flat edge support (13).

3. Anchor point (10) according to claim 2, **characterized in that** the edge support (13) is formed as a step.

4. Anchor point (10) according to claim 1-3, **characterized in that** the spring element (14) is formed as a plastic loop in the shape of an omega and exerts the spring action mainly in a direction perpendicular to the plane of the anchor plate.

5. Anchor point (10) according to claim 1-4, **characterized in that** the anchor plate (12) has at least two through-openings (26, 27).

6. Anchor point (10) according to claim 1-5, **characterized in that** the anchor point with spring element (14) and latching tongues (16, 17) is made in one piece of plastic and is preferably produced by injection molding.

7. Arrangement of an anchor point according to claim 6 and a fastening element (30), **characterized in that** the fastening element (30) is formed as a flexible, semi-rigid elastic band which, introduced through a first through-opening (26) at the upper side (23) of the anchor plate (12), is deflected along the guide surface (19) in the channel (25) and exits again through the second through-opening (27) at the upper side (23).

8. Arrangement according to claim 7, **characterized in that** the fastening element (30) is designed as a cable tie.

9. Method for fixing an anchor point (10) according to claim 1-8, comprising the following steps:
a) providing an opening of sufficient depth in a surface (18) and providing an anchor point (10);
b) pressing the anchor point (10) through the opening until the latching tongues (16, 17) rest behind the opening or, in the case of a top layer of a sandwich panel, spread in the core;
c) inserting a fastening element (30) in the form of an elastic semi-rigid band with one end (31) into a first through-opening (26) on the upper side (23) of the anchor plate (12);
d) until the end (31) on the upper side of the anchor plate (12) exits again at the second opening;
e) placing an object to be fastened on the anchor plate (12) in the area between the two ends of the fastening element (30);
f) exerting a tensile force on both ends (31, 32) of the fastening element (30) against the resistance of the spring element (14);
g) connecting the two ends of the fastening element (30) in such a way that the object to be fastened is pressed on by the spring force of the spring element (14).

10. Method according to claim 9, **characterized in that** steps a) to d) are carried out in the order a), c), d), b).

11. Method according to claim 9 or 10, **characterized in that** step e) is alternatively carried out as:
e1) attaching a tower element (40) to the anchor plate (12) in such a way that its centering components (41, 42) engage or snap into complementary structures of the anchor plate (12) in a form-fitting manner at the first longitudinal end;
e2) placing an object to be fastened in the receiving area (47) at the second longitudinal end of the tower element (40).

12. Method according to claim 9 and 11 or 10 and 11, **characterized in that** the sequence of steps is carried out as follows:
a), c), d), e1), b), e2), f), g) or a), e1), c), d), b), e2) f), g).

13. Method according to claim 9-12, **characterized in that** after step g) an adhesive or filler is injected into the opening behind the anchor plate (12) through a further or an existing opening in the anchor plate (12).

14. Method according to claim 9-12, **characterized in that** through step f) a storage capsule having adhesive or filler and being attached in the active region of the spring element (14) is activated and releases its contents in the opening.

## Revendications

1. Point d'ancrage (10) pour un élément de fixation (30), comprenant une plaque d'ancrage (12) sensiblement plate et un élément de ressort (14) relié à celle-ci qui présente pour sa part au moins deux languettes d'enclenchement (16, 17),
dans lequel les languettes d'enclenchement (16, 17) s'étendent à partir d'une zone de liaison (20) commune avec l'élément de ressort (14) de manière à peu près diamétralement opposée l'une à l'autre et se terminent chacune par une extrémité ouverte (21, 22) et chaque languette d'enclenchement présente une face supérieure et une face inférieure, la face supérieure étant tournée vers la plaque d'ancrage (12) et offrant une surface de guidage (19),
dans lequel l'élément de ressort (14) est de forme plane sur sa face extérieure dans la région tournée à l'opposé de la plaque d'ancrage (12) et/ou offre une surface d'appui (15), **caractérisé en ce que** la zone de liaison (20) est formée par une ou plusieurs barrettes ou sections de paroi qui relient les languettes d'enclenchement (16, 17) et l'élément de ressort (14) de telle manière que la surface de guidage (19) et la surface d'appui (15) sont au moins en partie disposées l'une en face de l'autre et à distance et forment une gorge (25, 25') entre elles.

2. Point d'ancrage (10) selon la revendication 1, **caractérisé en ce que** la plaque d'ancrage présente une forme de disque à peu près circulaire avec une face supérieure (23) et une face inférieure (24), laquelle face inférieure (24) présente un rebord d'appui (13) plan.

3. Point d'ancrage (10) selon la revendication 2, **caractérisé en ce que** le rebord d'appui (13) est conformé comme un gradin.

4. Point d'ancrage (10) selon les revendications 1 à 3, **caractérisé en ce que** l'élément de ressort (14) est conformé comme une boucle de matière plastique en forme d'oméga et exerce son effet de ressort principalement dans une direction perpendiculaire au plan de la plaque d'ancrage.

5. Point d'ancrage (10) selon les revendications 1 à 4, **caractérisé en ce que** la plaque d'ancrage (12) présente au moins 2 ouvertures traversantes (26, 27).

6. Point d'ancrage (10) selon les revendications 1 à 5, **caractérisé en ce qu'**il est fabriqué d'une pièce en matière plastique avec l'élément de ressort (14) et les languettes d'enclenchement (16, 17), de préférence par moulage par injection.

7. Ensemble composé d'un point d'ancrage selon la revendication 6 et d'un élément de fixation (30), **caractérisé en ce que** l'élément de fixation (30) est conformé comme une bande flexible, semi-rigide et élastique qui, quand elle est introduite à travers une première ouverture traversante (26) sur la face supérieure (23) de la plaque d'ancrage (12), est déviée le long de la surface de guidage (19) dans la gorge (25) et ressort à travers la deuxième ouverture traversante (27) sur la face supérieure (23).

8. Ensemble selon la revendication 7, **caractérisé en ce que** l'élément de fixation (30) est conformé comme un serre-câbles.

9. Procédé pour la fixation d'un point d'ancrage (10) selon les revendications 1 à 8, comprenant les étapes suivantes :
a) prévision d'une ouverture de profondeur suffisante dans une surface (18) et préparation d'un point d'ancrage (10) ;
b) enfoncement du point d'ancrage (10) à travers l'ouverture jusqu'à ce que les languettes d'enclenchement (16, 17) reposent derrière l'ouverture ou, dans le cas d'une couche de couverture d'un panneau en sandwich, s'écartent dans le noyau ;
c) introduction d'un élément de fixation (30) sous la forme d'une bande semi-rigide élastique avec une extrémité (31) dans une première ouverture traversante (26) sur la face supérieure (23) de la plaque d'ancrage (12),
d) jusqu'à ce que l'extrémité (31) ressorte sur la face supérieure de la plaque d'ancrage (12) au niveau de la deuxième ouverture ;
e) mise en place d'un objet à fixer sur la plaque d'ancrage (12) dans la région comprise entre les deux extrémités de l'élément de fixation (30) ;
f) application d'un effort de traction aux deux extrémités (31, 32) de l'élément de fixation (30) contre la résistance de l'élément de ressort (14) ;
g) assemblage des deux extrémités de l'élément de fixation (30) de telle manière que l'objet à fixer soit appuyé par la force de ressort de l'élément de ressort (14).

10. Procédé selon la revendication 9, **caractérisé en ce que** les étapes a) à d) sont exécutées dans l'ordre a), c), d), b).

11. Procédé selon la revendication 9 ou 10, **caractérisé en ce que** l'étape e) peut aussi être exécutée de la manière suivante :
e1) mise en place d'un élément en forme de colonne (40) sur la plaque d'ancrage (12) de telle manière que les composants de centrage (41, 42) de celui-ci se mettent en prise ou s'enclenchent en correspondance de forme à une extrémité dans le sens longitudinal dans des structures complémentaires de la plaque d'ancrage (12) ;
e2) mise en place d'un objet à fixer dans la région de réception (47) à la deuxième extrémité dans le sens longitudinal de l'élément en forme de colonne (40).

12. Procédé selon les revendications 9 et 11 ou 10 et 11, **caractérisé en ce que** l'ordre d'exécution des étapes est le suivant : a), c), d), e1), b), e2), f), g) ou a), e1), c), d), b), e2) f), g).

13. Procédé selon les revendications 9 à 12, **caractérisé en ce que**, après l'étape g), un adhésif ou un matériau de remplissage est introduit dans l'ouverture située derrière la plaque d'ancrage (12) à travers une autre ouverture ou une ouverture existante dans la plaque d'ancrage (12).

14. Procédé selon les revendications 9-12, **caractérisé en ce que** l'étape f) active une capsule de réserve d'adhésif ou de matériau de remplissage mise en place dans la zone d'action de l'élément de ressort (14) et libère son contenu dans l'ouverture.
